(19) Europäisches Patentamt
European Patent Office
Office européen des brevets

(11) Veröffentlichungsnummer: **0 367 012 B1**

(12) # EUROPÄISCHE PATENTSCHRIFT

(45) Veröffentlichungstag der Patentschrift: **29.09.93**

(51) Int. Cl.5: **C08L 83/04**, //(C08L83/04, C08K3:26)

(21) Anmeldenummer: **89119205.6**

(22) Anmeldetag: **17.10.89**

Die Akte enthält technische Angaben, die nach dem Eingang der Anmeldung eingereicht wurden und die nicht in dieser Patentschrift enthalten sind.

(54) **Unter Ausschluss von Feuchtigkeit lagerfähige RTV-1K-Massen, die überstreichbare Elastomere bilden.**

(30) Priorität: **29.10.88 DE 3836916**

(43) Veröffentlichungstag der Anmeldung:
**09.05.90 Patentblatt 90/19**

(45) Bekanntmachung des Hinweises auf die Patenterteilung:
**29.09.93 Patentblatt 93/39**

(84) Benannte Vertragsstaaten:
**AT BE CH DE ES FR GB IT LI NL**

(56) Entgegenhaltungen:
**EP-A- 043 501**
**EP-A- 0 157 580**
**CH-A- 380 948**
**DE-B- 1 258 087**
**US-A- 3 957 714**

(73) Patentinhaber: **BAYER AG**

**D-51368 Leverkusen(DE)**

(72) Erfinder: **Endres, Robert, Dr.**
**Kalmüntener Strasse 8**
**D-5060 Bergisch-Gladbach 2(DE)**
Erfinder: **Weber, Wilhelm, Dr.**
**Heinrich-von-Kleist-Strasse 10**
**D-5090 Leverkusen 1(DE)**
Erfinder: **Preuss, Krystyna**
**Vincent-van-Gogh-Strasse 32**
**D-5090 Leverkusen 1(DE)**

EP 0 367 012 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft lagerstabile raumtemperaturvernetzende Einkomponentenmassen auf Siliconbasis, die nach der Durchhärtung an feuchter Luft überstreichbare Elastomere mit sehr guter Lackhaftung bilden. Solche Elastomere können als Fugendichtungsmassen in der Baubranche verwendet werden wie z.B. für die Abdichtung von Sanitär-, Boden- und Wandfugen oder für die Versiegelung von Fenstern zwischen Glas und Rahmen bzw. Rahmen und Wand.

An feuchter Luft vernetzbare Silicondichtungsmassen bestehen in der Regel aus $\alpha,\omega$-Dihydroxypolydiorganosiloxanen und Siliconölen, die gegebenenfalls mit gefällten oder pyrogenen Kieselsäuren, Quarzmehl, Diatomeenerde, Dolomitmehl, Kreiden, Zinkoxid und anderen Füllstoffen vermischt werden. Fügt man zu solchen Systemen siliciumorganische Verbindungen hinzu, die mehr als zwei reaktive Gruppen besitzen und die sowohl mit Silanolgruppen als auch mit Wasser reagieren können - wobei diese Reaktionen in der Regel der Katalysatoren wie Titansäureestern und Schwermetallsalzen beschleunigt werden - und schließt man dabei den Zutritt jeglicher Feuchtigkeit aus, so ergeben sich lagerstabile Massen, die erst bei Zutritt von atomosphärischer Luft durch deren Wasserdampfgehalt zu Siliconelastomeren vernetzen.

Solche RTV-1K-Systeme können, wie zuvor beschrieben, als Fugendichtungsmassen verwendet werden. Besonders bewährt hat sich das sogenannte Neutralsystem auf der Basis von Carbonsäureamidoalkylalkoxysilanen, wie z.B. in DE-PS 1 247 646 und DE-PS 1 258 087 beschrieben. Allerdings sind diese Dichtstoffe nicht überlackierbar, eine Eigenschaft, die in der Baubranche häufig gefordert wird.

Nach US-PS 3 957 714 und US-PS 4 293 616 werden zwar überstreichbare Systeme auf Basis von Carboxylatsilanen beschrieben, die im ersten Fall mittels nadelförmigem Calciumcarbonat und Lösungsmittelzusatz, im zweiten Fall durch gecoatete, gemahlene Kreiden und Zusatz von Polyethern hergestellt werden. Doch weisen die resultierenden Elastomere stark veränderte mechanische Eigenschaften wie hohen Modul und hohe Shore-A-Härte, niedrige Bruchdehnung, Volumschrumpfung und eingeschränkte Überlackierbarkeit auf. Letzteres trifft auch für die Systeme gemäß EP 43 501 zu, bei denen die Überstreichbarkeit 1-3 Tage nach Aufbringung des Dichtstoffes störungsfrei erfolgen kann, während später zunächst eine Vorreinigung mit Lösungsmitteln erfolgen muß.

Nach der vorliegenden Erfindung lassen sich die genannten Nachteile beheben. Gegenstand der Erfindung sind unter Ausschluß von Feuchtigkeit lagerfähige, bei Umgebungstemperatur unter Einwirkung von Wasser oder atmosphärischer Luft zu niedermoduligen Elastomeren hoher Dehnung und Reißfestigkeit härtbare Polydiorganosiloxanmassen, erhältlich durch Mischen von $\alpha,\omega$-Dihydroxypolydiorganosiloxanen, gegebenenfalls $\alpha,\omega$-Bis-(triorganylsiloxy)-polyorganosiloxanen mit als Vernetzungsmittel dienenden Carbonsäureamidoalkylalkoxy-Silanen und komplexen Titansäureestern sowie Füllstoffen und gegebenenfalls Pigmenten und die Vernetzung beschleunigenden Schwermetallsalzen, die dadurch gekennzeichnet sind, daß als Füllstoff gefällte, hydrophobierte Kreide verwendet wird, deren Restfeuchtigkeit vor dem Zusatz von Titansäureestern und Vernetzungsmitteln auf einen Gehalt von weniger als 0,15 Gew.-% gebracht wurde.

Überraschenderweise hat sich herausgestellt, daß die so hergestellten Dichtstoffe selbst noch nach mehreren Wochen mit handelsüblichen Lacken überstreichbar sind. Wenn der Dichtstoff nach dieser Zeit frei von äußeren Verschmutzungen ist, so kann die Lackierung ohne Vorbehandlung wie z.B. Vorreinigung durchgeführt werden. Als Lacke können Vor- und Decklacke auf Basis von Alkydharzen, Polyurethanen, Polyacrylaten, Polystyrolen, Polyvinylacetaten und Polyvinylpropionaten sowohl als Lösungsmittel- wie auch als wäßriges Dispersionssystem angewendet werden. Nach der Durchhärtung des Lackes resultiert jeweils eine sehr gute Lackhaftung. Eine sehr interessante Variante, insbesondere für Feuchträume im Sanitärbereich (Bad, Dusche, Saunabereich etc.) ist die Möglichkeit, Lacke mit fungiziden Wirkstoffzusätzen zu verwenden. Dadurch, daß die erfindungsgemäßen Dichtstoffe auch nach vollständiger Durchhärtung und danach überstreichbar bleiben, ist gegebenenfalls eine Erneuerung der Lackierung in den erforderlichen Zeitabständen für die nachlassende fungizide Aktivität möglich geworden.

Somit ist das Problem des Pilzbefalles von Dichtungsfugen in Feuchträumen ab ca. 2 Jahren Standzeit durch Lackauffrischung behebbar geworden. Eine längere Lebensdauer der Dichtungsfugen ist die zwangsläufige Folge.

Für die Herstellung der erfindungsgemäßen RTV-1K-Massen werden als Polymere bevorzugt $\alpha,\omega$-Dihydroxypolydiorganosiloxane eingesetzt, die im wesentlichen Methylgruppen enthalten und deren Viskosität bei 20 °C zwischen 1000 und 1 000 000 mPas, besonders bevorzugt zwischen 10 000 und 300 000 Pas liegt. Die Konzentration des Polymers sollte zwischen 25 und 60 Gew.-% liegen. Für die Herstellung von Dichtstoffen ist die Verwendung von Weichmacherölen üblich, aber für die erfindungsgemäßen Systeme nicht zwingend erforderlich. Als Weichmacheröl wird bevorzugt Trimethylsilox-endgestopptes Polydimethylsiloxanöl mit einer Viskosität zwischen 30 und 10 000 mPas, bei 20 °C gemessen, verwendet. Darüberhinaus kommen Siliconöle in Betracht, die aus T-, D- und M-Einheiten bestehen sowie Polymere des Typs

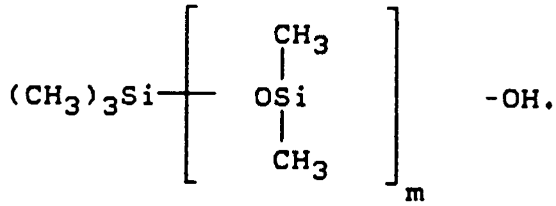

Als optimale Verstärkungsfüllstoffe haben sich gefällte und damit besonders feinteilige Kreiden erwiesen mit einem mittleren Teilchendurchmesser unter 0,5 µm, bevorzugt unter 0,1 µm, die mit Carbonsäuren oder Silanen gecoatet und damit hydrophobiert sind. Besonders bevorzugt ist die Stearinsäure, deren Konzentration über 2,0 Gew.-% liegen sollte, eine gleichmäßige Verteilung vorausgesetzt. Für die Herstellung weiß eingefärbter Dichtstoffe sollte auch eine Kreide mit möglichst hohem Weißgrad und geringem Farbstich verwendet werden,

Um standfeste Massen zu erhalten, benötigt man zwischen 30 und 55 Gew.-% Kreide, wobei besonders feinteilige Kreiden bereits ab 30 Gew.-% Standfestigkeit ergeben, während hingegen Kreiden von über 0,1 µm mittlerer Teilchengröße in Mengen bis zu 55 Gew.-% zugesetzt werden müssen. Die Ermittlung der Standfestigkeit erfolgt nach DIN 65 262 Teil 3 bei 23 °C und 50 % relativer Luftfeuchtigkeit an einem frischen Pastenauftrag auf vertikalem Untergrund. Nach 30 Minuten sollte eine 1 cm dicke Paste nicht mehr als 1,5 mm nach unten gelaufen sein.

Verwendet man eine Kreide der beschriebenen Charakteristik, so benötigt man keine Zusätze wie z.B. Kieselsäuren, um die Standfestigkeit einzustellen. Denn Zusätze dieser Art führen nur zu einer Verstrammung des nach der Vernetzung entstandenen Elastomers und wirken der Überstreichbarkeit und Lackhaftung entgegen.

Die handelsüblichen gefällten Kreiden enthalten bis zu 1 Gew.-% Wasser, besonders feinteilige Typen noch mehr. Wesentlicher Bestandteil der vorliegenden Erfindung ist ein niedriger Feuchtigkeitsgehalt der Kreide; er sollte unter 0,15 Gew.-%, möglichst jedoch unter 0,10 Gew.-% liegen, wobei insbesondere bei Kreidezusätzen an der oberen Mengen-Grenze die Feuchtigkeit so niedrig wie möglich sein sollte, um eine lagerstabile Paste zu erhalten.

Für die Entfernung des Wassers im Füllstoff gibt es zunächst die Möglichkeit einer separaten Trocknung. Sie sollte im Fall der mit Stearinsäure gecoateten Kreiden möglichst unter 120 °C durchgeführt werden. Optimale Trocknungsaggregate sind z.B. Vakuumbandtrockner, Vakuumtrommeltrockner und Mikrowellentrockner. Beim Einbringen der getrockneten Kreide in das Polymer ist auf einen strengen Ausschluß von Luftfeuchtigkeit zu achten, der auch für die weitere Verarbeitung der Mischung zu beachten ist. Eine weitere mögliche Verfahrensweise ist die Trocknung des Systems Kreide und Polymere inklusive Weichmacheröl. Technisch sind dafür Aggregate mit extrem guter Durchmischung und damit günstigen Wärmeübergang wie z.B. Mischschnecken mit Vakuumsegmenten gut geeignet.

Die so hergestellten Pasten lassen eine Erniedrigung der Konzentrationen von Titansäureester und der Carbonsäureamidoalkylalkoxy-Siliciumverbindungen zu im Vergleich zu den konservativ hergestellten Pasten im Planetenmischer ohne Trocknungsschritt. Die Maßnahme führt nicht nur zu kostengünstigeren Systemen, sondern überraschenderweise zu besseren mechanischen Eigenschaften der Dichtstoffe. Eine Erniedrigung der Konzentrationen der genannten Verbindungen unter 4 Gew.-%, bevorzugt unter 3 Gew.-% bewirkt eine Erniedrigung von E-Modul und Shore-A-Härte und eine Erhöhung der Bruchdehnung, also Änderungen, die erwünscht sind.

Als Titansäureester können Titantetraalkylester, Dialkyltitandialkylester und andere Titanorganoester mit chelat-bildenden Gruppen, wie sie z.B. in der Patentanmeldung DE-PS 1 258 087 aufgeführt sind, eingesetzt werden. Besonders bevorzugt werden Di-i-butoxytitandiacetessigsäureethylesterchelat und Di-i-propoxytitan-bis-acetylacetonat. Als Vernetzer kommen Carbonsäureamidoalkylalkoxy-Silicium-Verbindungen zur Anwendung wie z.B.:

Di-N-methylbenzamido-methyl-ethoxy-silan
Di-N-methylbenzamido-methyl-methoxy-silan
Di-N-methylpropylamido-methyl-ethoxy-silan
Mono-N-methylpropylamido-methyl-diethoxy-silan
Di-N-methylpropylamido-methyl-methoxysilan

Di-N-methylcaprolactam-methyl-ethoxy-silan
Di-N-methylcaprolactam-methyl-methoxy-silan.

Besonders bevorzugt wird Di-N-methylbenzamido-methyl-ethoxy-silan als Vernetzer eingesetzt.

Die folgenden Beispiele sollen die vorliegende Erfindung veranschaulichen:

## Beispiel 1

In eine Mischung aus 32,0 Gewichtsteilen α,ω-Dihydroxypolydimethylsiloxan der Viskosität 50 000 mPas und 13,3 Gewichtsteilen α,ω-Bis-(trimethylsiloxy)-polydimethylsiloxan der Viskosität 100 mPas werden 48,0 Gewichtsteile einer gefällten, mit Stearinsäure behandelten Kreide eines mittleren Teilchendurchmessers von 0,08 µm unter Feuchtigkeitsausschluß 15 Minuten eingemischt. Die Mischung wird im Vakuum bei 2 mbar und 100 °C 30 Minuten gerührt und anschließend auf eine Temperatur unter 40 °C abgekühlt. Dann werden 3,0 Gewichtsteile Di-i-butoxytitandiacetessigsäureethylesterchelat zugegeben und 20 Minuten unter Vakuum gerührt, anschließend 0,7 Gewichtsteile Dibutylzinndilaurat mit einer Rührzeit von 5 Minuten und zum Schluß 3,0 Gewichtsteile Di-N-methylbenzamido-methyl-ethoxysilan untergerührt und ca. 20 Minuten evakuiert.

Die Masse wird in Kartuschen abgefüllt und unter Feuchtigkeitsausschluß gelagert. Die Lagerfähigkeit beträgt mindestens 1/2 Jahr, ohne daß die Eigenschaften der Paste oder des Dichtstoffes bei einer späteren Anwendung beeinträchtigt werden.

Die Paste vulkanisiert unter Einfluß von Luftfeuchtigkeit zu einem Silicongummi mit folgenden mechanischen Eigenschaften:

| | |
|---|---|
| Shore-A-Härte | 26 |
| E-Modul 100 % | 0,60 $N/mm^2$ |
| Reißfestigkeit | 1,35 $N/mm^2$ |
| Bruchdehnung | 400 % |

## Beispiel 2

32,0 Gewichtsteile α,ω-Dihydroxypolydimethylsiloxan der Viskosität 50 000 mPas und 13,5 Gewichtsteile α,ω-Bis-(trimethylsiloxy)-polydimethylsiloxan der Viskosität 100 mPas werden mit 49,0 Gewichtsteilen einer gefällten Kreide wie im Beispiel 1 vermischt und getrocknet. In die abgekühlte Mischung werden 2,2 Gewichtsteile Di-i-butoxytitandiacetessigsäureethylesterchelat (20 Minuten), 0,7 Gewichtsteile Dibutylzinndilaurat (5 Minuten) und 2,6 Gewichtsteile Di-N-methylbenzamidomethylethoxysilan (20 Minuten) nacheinander eingerührt und ca. 20 Minuten evakuiert. Die in Kartuschen abgefüllte Paste kann unter Ausschluß von Luftfeuchtigkeit mindestens 1/2 Jahr gelagert werden, ohne ihre Qualität einzubüßen.

Mechanische Eigenschaften des unter Luftfeuchtigkeit hergestellten Silicongummis:

| | |
|---|---|
| Shore-A-Härte | 25 |
| E-Modul 100 % | 0,56 $N/mm^2$ |
| Reißfestigkeit | 1,80 $N/mm^2$ |
| Bruchdehnung | 810 % |

## Beispiel 3

Es wird als Polymer ein α,ω-Dihydroxypolydimethylsiloxan der Viskosität 80 000 mPas eingesetzt, wobei ansonsten ein Dichtstoff identisch nach Beispiel 2 hergestellt wird. Das System erwies sich ebenfalls über 1/2 Jahr als lagerstabil.

Mechanische Eigenschaften des an feuchter Luft hergestellten Dichtstoffes:

| | |
|---|---|
| Shore-A-Härte | 27 |
| E-Modul 100 % | 0,65 $N/mm^2$ |
| Reißfestigkeit | 1,81 $N/mm^2$ |
| Bruchdehnung | 660 % |

Beispiel 4

40,5 Gewichtsteile $\alpha,\omega$-Dihydroxypolydimethylsiloxan der Viskosität 50 000 mPas und 14,0 Gewichtsteile $\alpha,\omega$-Bis-(trimethylsiloxy)-polydimethylsiloxan der Viskosität 100 mPas werden mit 40,0 Gewichtsteilen einer gefällten Kreide wie im Beispiel 1 vermischt und im Vakuum 30 Minuten bei 100 °C von anhaftendem Wasser befreit. In die abgekühlte Mischung werden 2,2 Gewichtsteile Di-i-butoxytitandiacetessigsäureethylesterchelat (20 Minuten), 0,7 Gewichtsteile Dibutylzinndilaurat (5 Minuten) und 2,6 Gewichtsteile Di-N-methylbenzamido-methylethoxysilan (20 Minuten) nacheinander eingerührt und jeweils evakuiert. Die so hergestellte Paste ist unter Ausschluß von Luftfeuchtigkeit mindestens 1/2 Jahr lagerstabil.

Mechanische Eigenschaften des an feuchter Luft hergestellten Dichtstoffes:

| | |
|---|---|
| Shore-A-Härte | 22 |
| E-Modul 100 % | 0,43 $N/mm^2$ |
| Reißfestigkeit | 1,80 $N/mm^2$ |
| Bruchdehnung | 971 % |

Beispiel 5

Es wird ein Dichtstoff nach der Rezeptur von Beispiel 4 hergestellt mit dem Unterschied, daß die Kreide bereits vor der Zugabe zu den anderen Rohstoffen separat getrocknet wurde (Vakuumtrocknung bei 60 °C in einer Schichthöhe von ca. 2 cm bis zur Gewichtskonstanz). Nach Zugabe der Kreide unter Ausschluß von Luftfeuchtigkeit wird bis zur Homogenität gerührt (ca. 30 Minuten) und wie nach Beispiel 4 weitergearbeitet.

Man erhält ebenfalls einen unter Ausschluß von Luftfeuchtigkeit über 1/2 Jahr lagerstabilen Dichtstoff, der nach der Vulkanisation durch Luftfeuchtigkeit folgende mechanische Eigenschaften besitzt:

| | |
|---|---|
| Shore-A-Härte | 21 |
| E-Modul 100 % | 0,41 $N/mm^2$ |
| Reißfestigkeit | 1,89 $N/mm^2$ |
| Bruchdehnung | 990 % |

Die mechanischen Werte der Beispiele 1-5 beziehen sich auf die DIN-Norm 53 505 (Shore-A-Härte) und DIN 53 504 (Normstab). Alle hergestellten Dichtstoffe wurden auf ihre Überlackierbarkeit geprüft.

Nach Vulkanisationsbeginn unter Normklimabedingungen (23 °C, 50 % relative Luftfeuchtigkeit) wurden Lacke im Zeitabstand von 24 und 48 Stunden sowie von 7 Tagen aufgetragen, ohne die Dichtstoffoberfläche in irgendeiner Weise vorzubehandeln. Die Lackhaftung wurde nach dem Boeing-Test gemäß ASTM D 3359-70 durchgeführt.

**Tabelle 1:**

Lackhaftung (Boeing-Test gemäß ASTMD 3359-70)

Auftragung des Lackes auf die Dichtstoffe der Beispiele 1-5

| | 24 h | 48 h | 7 Tage | 4 Wochen nach Vulkanisationsbeginn |
|---|---|---|---|---|
| Weißer Decklack auf Alkydharzbasis | 100 % | 100 % | 100 % | 100 % |
| Weißer Decklack auf Alkydharzbasis mit 1 % Fungizid Preventol A 4 S®1) | 100 % | 100 % | 100 % | 100 % |
| Brauner Decklack auf Acrylbasis, wäßrige Emulsion | 100 % | 100 % | 100 % | 100 % |

1) Handelsprodukt der Fa. BAYER AG, Leverkusen

## Patentansprüche

1. Unter Ausschluß von Feuchtigkeit lagerfähige, bei Umgebungstemperatur unter Einwirkung von Wasser oder atmosphärischer Luft zu niedermoduligen Elastomeren hoher Dehnung und Reißfestigkeit härtbare

Polydiorganosiloxanmassen, erhältlich durch Mischen von α,ω-Dihydroxypolydiorganosiloxanen, gegebenenfalls weichmachenden Polysiloxanen mit als Vernetzungsmittel dienenden Carbonsäureamidoalkyl-alkoxy-Silanen und komplexen Titansäureestern sowie Füllstoffen und gegebenenfalls Pigmenten und die Vernetzung beschleunigenden Schwermetallsalzen, dadurch gekennzeichnet, daß als Füllstoff gefällte, hydrophobierte Kreide verwendet wird, deren Restfeuchtigkeit vor dem Zusatz von Titansäureestern und Vernetzungsmitteln auf einen Gehalt von weniger als 0,15 Gew.-% gebracht wurde.

**2.** Polydiorganosiloxanmassen gemäß Anspruch 1, dadurch gekennzeichnet, daß die gefällte Kreide einen mittleren Teilchendurchmesser unter 0,5 µm aufweist.

**3.** Polydiorganosiloxanmassen gemäß einem der Ansprüche 1 oder 2, dadurch gekennzeichnet, daß mit Stearinsäure hydrophobierte Kreiden verwendet werden.

**4.** Polydiorganosiloxanmassen gemäß einem der Ansprüche 1 bis 3, dadurch gekennzeichnet, daß der Anteil der Kreiden zwischen 30 und 55 Gew.-% beträgt.

**5.** Polydiorganosiloxanmassen gemäß einem der Ansprüche 1 bis 4, dadurch gekennzeichnet, daß die Kreide auf einen Feuchtigkeitsgehalt unter 0,10 Gew.-% entwässert wird.

**6.** Polydiorganosiloxanmassen gemäß einem der Ansprüche 1 bis 5, dadurch gekennzeichnet, daß als Vernetzungsmittel Di-N-methylbenzamidomethylethoxysilan eingesetzt wird.

**7.** Polydiorganosiloxanmassen gemäß einem der Ansprüche 1 bis 6, dadurch gekennzeichnet, daß Kreiden eingesetzt werden, die separat und/oder nach der Einmischung in die α,ω-Dihydroxy-polydiorganosiloxane und gegebenenfalls α,ω-Bis-(triorganylsiloxy)-polyorganosiloxane entwässert wurden.

**8.** Verwendung der nach den Ansprüchen 1 bis 7 hergestellten Polydiorganosiloxanmassen als überstreichbare Beschichtungsstoffe und Fugendichtungsmassen.

**Claims**

**1.** Polydiorganosiloxane compositions which are stable in storage under exclusion of moisture and can be cured by the action of water or atmospheric air at the ambient temperature to give rise to elastomers with a low modulus and high elongation and ultimate strength, obtainable by mixing α,ω-dihydroxypolydiorganosiloxanes, optionally plasticizing polysiloxanes, with carboxylic acid amidoalkyl alkoxysilanes serving as cross-linking agents and complex titanic acid esters as well as fillers and optionally pigments and heavy metal salts which accelerate cross-linking, characterised in that precipitated, hydrophobicised chalk whose residual moisture has been reduced to less than 0.15% by weight before the addition of titanic acid esters and cross-linking agents is used as filler.

**2.** Polydiorganosiloxane compositions according to Claim 1, characterised in that the precipitated chalk has an average particle diameter below 0.5 µm.

**3.** Polydiorganosiloxane compositions according to one of the Claims 1 or 2, characterised in that chalks which have been rendered hydrophobic with stearic acid are used.

**4.** Polydiorganosiloxane compositions according to one of the Claims 1 to 3, characterised in that the proportion of chalks is from 30 to 55% by weight.

**5.** Polydiorganosiloxane compositions according to one of the Claims 1 to 4, characterised in that the chalk is dehydrated to a moisture content below 0.10%.

**6.** Polydiorganosiloxane compositions according to one of the Claims 1 to 5, characterised in that di-N-methylbenzamido-methyl-ethoxysilane is used as cross-linking agent.

**7.** Polydiorganosiloxane compositions according to one of the Claims 1 to 6, characteised in that the chalks used have been dehydrated separately and/or after they have been mixed with the α,ω-dihydroxy-polydiorganosiloxanes and optionally α,ω-bis-(triorganylsiloxy)-polyorganosiloxanes.

**8.** Use of the polydiorganosiloxane compositions prepared according to Claims 1 to 7 as coating materials and joint sealing compounds which can be painted over.

## Revendications

**1.** Masses de polydiorganosiloxanes stables à la conservation à l'abri de l'humidité, durcissables à température ambiante sous l'action de l'eau ou de l'air atmosphérique en élastomères à bas poids moléculaire à fort allongement et haute résistance à la rupture, obtenues par mélange d'α,ω-dihydroxy-polydiorganosiloxanes, le cas échéant de polysiloxanes plastifiants, avec des carboxamidoalkylalcoxysilanes servant d'agents réticulants et des esters titaniques complexes, ainsi que des matières de charge et le cas échéant des pigments et des sels de métaux lourds accélérant la réticulation, caractérisées en ce qu'elles contiennent en tant que matière de charge une craie précipitée hydrofugée dont la teneur en humidité résiduelle a été ramenée à moins de 0,15 % en poids avant l'addition des esters titaniques et des agents réticulants.

**2.** Masses de polydiorganosiloxanes selon la revendication 1, caractérisées en ce que la craie précipitée a un diamètre de particule moyen inférieur à 0,5 µm.

**3.** Masses de polydiorganosiloxanes selon une des revendications 1 ou 2, caractérisées en ce qu'elles contiennent de la craie hydrofugée par de l'acide stéarique.

**4.** Masses de polydiorganosiloxanes selon une des revendications 1 à 3, caractérisées en ce que la proportion de craie va de 30 à 55 % en poids.

**5.** Masses de polydiorganosiloxanes selon une des revendications 1 à 4, caractérisées en ce que la craie est séchée jusqu'à une teneur en humidité inférieure à 0,10 % en poids.

**6.** Masses de polydiorganosiloxanes selon une des revendications 1 à 5, caractérisées en ce qu'elles contiennent en tant qu'agent réticulant du di-N-méthylbenzamido-méthyléthoxy-silane.

**7.** Masses de polydiorganosiloxanes selon une des revendications 1 à 6, caractérisées en ce que l'on utilise une craie qui a été séchée séparément et/ou après mélange avec les α,ω-dihydroxy-polydiorganosiloxanes et le cas échéant les α,ω-bis-(triorganylsiloxy)-polyorganosiloxanes.

**8.** Utilisation des masses de polydiorganosiloxanes préparées selon les revendications 1 à 7 en tant que matières d'enduction et masses de jointovage aptes aux revêtements.